# DEMANDE DE BREVET EUROPEEN

(11) **EP 1 246 337 A2**
(43) Date de publication de la demande: **02.10.2002**
(21) Numéro de dépôt: 02290742.2
(22) Date de dépôt: 25.03.2002
(51) Int. Cl.: H02J 7/00

(54) **Dispositif de support et de présentation d'appareil amovible et rechargeable tel qu'un terminal mobile de téléphonie cellulaire**

(30) Priorité: 28.03.2001 FR 0104154
(71) Demandeur: SAGEM SA, 75015 Paris (FR)
(72) Inventeur: Albert, Laurent, 95160 Montmorency (FR)
(74) Mandataire: Texier, Christian

(57) **Abrégé**

Dispositif de support et de présentation d'appareil amovible rechargeable tel qu'un terminal mobile de téléphonie cellulaire comportant une embase (1), des moyens de guidage de l'appareil rechargeable vers des moyens de connexion à des moyens formant chargeur de batterie, **caractérisé en ce qu**'il comporte des moyens aptes à recevoir de façon amovible une fiche (13) de connexion d'un chargeur externe (11) de batterie, fiche (13) sur laquelle l'appareil rechargeable se connecte directement lorsque ledit appareil et ladite fiche (13) sont en place sur l'embase (1).

## Description

### DOMAINE TECHNIQUE GENERAL.

L'invention concerne un dispositif de support et de présentation d'appareil amovible et rechargeable.

Plus particulièrement, il trouve application dans le domaine de la téléphonie mobile en tant qu'embase de chargement de la batterie d'un terminal mobile de téléphonie cellulaire.

### ETAT DE L'ART.

Les embases de chargement constituent des moyens de support et de présentation des téléphones mobiles.

Ces embases de chargement des téléphones mobiles comportent généralement des moyens de connectique intégrés.

Elles se présentent principalement sous deux formes.

Dans une première forme, l'utilisateur connecte son chargeur de batterie à l'arrière de l'embase. Des moyens connecteurs intégrés à l'embase permettent la connexion électrique entre le chargeur branché à l'arrière de l'embase et les connexions électriques situées à la base de la batterie intégrée au téléphone mobile.

Dans une deuxième forme, l'embase constitue en elle-même l'ensemble du chargeur de batterie. Elle comporte en son sein l'ensemble des constituants formant la connectique électrique.

Les dispositifs précédents présentent cependant des inconvénients.

L'un des objets des téléphones mobiles est de d'être facilement transportables. L'utilisateur doit pouvoir emmener le chargeur de son téléphone facilement. Il peut également souhaiter emmener son embase de chargement.

Or, les embases de l'état de la technique comportant des moyens formant connecteurs sont lourdes et volumineuses.

De plus, dans les embases selon l'état de la technique, les moyens formant connectique sont toujours visibles par l'utilisateur lorsque l'appareil n'est plus sur son embase. Les embases ne répondent donc pas totalement à leur exigence esthétique.

Enfin, leurs coûts de production sont élevés.

### PRESENTATION DE L'INVENTION.

L'invention propose de pallier ces inconvénients.

A cet effet, l'invention propose un dispositif de support et de présentation d'appareil amovible rechargeable comportant une embase, des moyens de guidage de l'appareil rechargeable vers des moyens de connexion à des moyens formant chargeur de batterie, caractérisé en ce qu'il comporte des moyens aptes à recevoir de façon amovible une fiche de connexion d'un chargeur externe de batterie, fiche sur laquelle l'appareil rechargeable se connecte directement lorsque ledit appareil et ladite fiche sont en place sur l'embase.

L'invention est avantageusement complétée par les caractéristiques suivantes, prises seules ou en une quelconque de leur combinaison techniquement possible :
- la fiche de connexion étant reliée au chargeur externe par un connecteur souple, le dispositif comporte des moyens aptes à maintenir fixement le connecteur souple par rapport à l'embase entre la fiche de connexion et un orifice par lequel ledit connecteur souple sort de l'embase ;
- les moyens de guidage comportent un capot amovible de l'embase, le capot comportant des ergots s'étendant au droit de deux côtés du capot et coopérant avec des rainures standard présentes sur les appareils amovibles ;
- le capot est apte à pivoter entre une position fermée dans laquelle il cache la fiche et/ou les moyens aptes à recevoir celle-ci, et une position ouverte qui permet le guidage de l'appareil vers ladite fiche et/ou son maintien selon une inclinaison ergonomique prédéterminée ;
- l'inclinaison ergonomique fait avec la verticale un angle prédéterminé compris entre 20° et 30 ° lorsque l'embase est en position sur une surface à laquelle elle est destinée.
- les moyens de maintien du connecteur souple du chargeur de batterie comportent des ensembles de pattes de fixation disposés sur la face inférieure de l'embase et entre lesquelles le connecteur souple est maintenu par serrage ;
- il comporte en outre des moyens de plaquage élastiques du connecteur souple du chargeur de batterie sur une ou des parois inférieures de l'embase ;
- les moyens aptes à maintenir la fiche du chargeur comportent des ergots s'étendant au droit d'une ouverture dans laquelle la fiche de connexion est destinée à être reçue.
- il peut être compris dans un ensemble comportant en outre un chargeur de batterie et/ou un appareil amovible rechargeable.

### PRESENTATION DES FIGURES

D'autres caractéristiques et avantages de l'invention ressortiront de la description qui suit qui est purement illustrative et non limitative, et qui doit être lue en regard des dessins annexés sur lesquels :
- la figure 1 représente une vue générale de dessus et en perspective de la base du dispositif selon l'invention ;
- la figure 2 est une représentation de trois quarts du capot du dispositif selon l'invention ;
- la figure 3 est une vue de dessous du capot ;
- la figure 4 représente une vue générale de dessous et en perspective du dispositif selon l'invention ;
- la figure 5 est une représentation schématique d'un chargeur comportant une fiche rigide et une partie souple.

### DESCRIPTION D'UN MODE DE REALISATION.

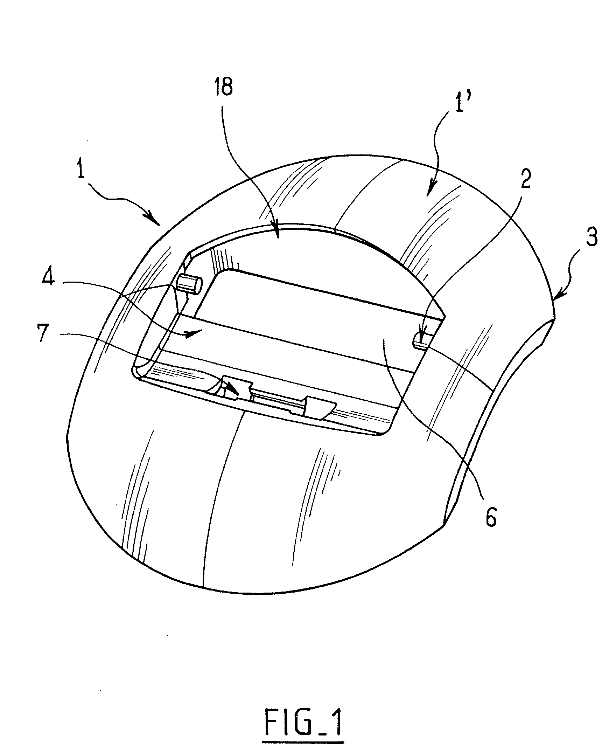

Le dispositif 1 de support et de présentation est représenté sur la figure 1.

Préférentiellement, le dispositif 1 définit globalement une calotte supérieure d'une forme ovoïde. Le critère de choix de cette forme est purement esthétique. Bien entendu, n'importe quelle forme serait acceptable et resterait dans le domaine de l'invention.

Le dispositif 1 sera préférentiellement en matière plastique pour favoriser la légèreté de l'ensemble et son caractère transportable. La matière plastique a de plus l'avantage de maintenir les coûts de production du dispositif 1 peu élevés. Cependant, toute autre matière peut être considérée sans pour autant quitter le domaine de l'invention.

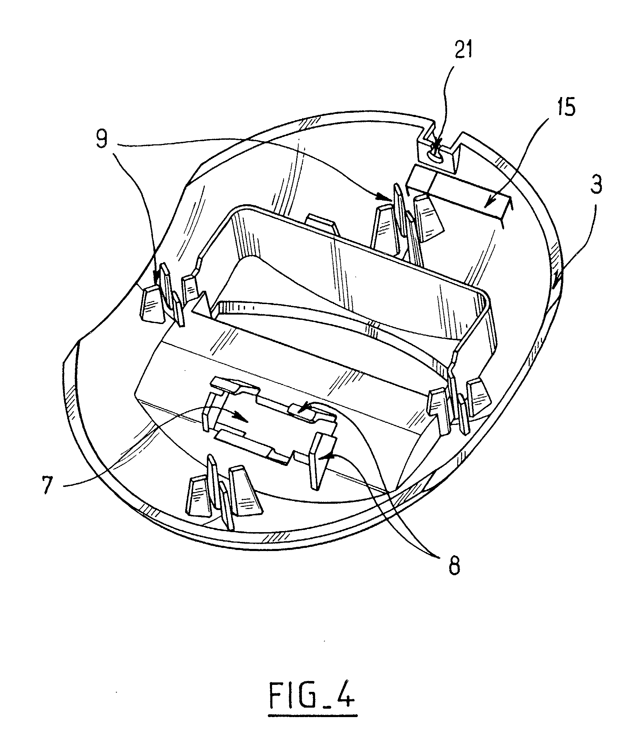

L'extension spatiale du dispositif 1 du côté de sa partie tronquée, représentée sur la figure 4, définit sa stabilité. Plus l'aire de la section tronquée est grande, plus le dispositif sera stable. Dans un mode de réalisation, l'extension spatiale du dispositif se définit par exemple par 100 mm de longueur et 72 mm de largeur.

Ainsi les bords référencés par 3 sur les figures 1 et 4 constituent des moyens de stabilisation du dispositif 1. Ce sont eux qui sont en contact avec le support sur lequel sera posé le dispositif 1.

Le dispositif 1 comporte une embase qui comprend un base 1' et un capot 5.

Une dépression 4 est située au milieu de la face supérieure bombée de la base 1'. La section de cette dépression 4 est sensiblement de forme rectangulaire.

Le contour intérieur de la section de la dépression 4 est complémentaire du contour extérieur de la section d'une gamme d'appareils qui sont destinés à être placés dans la dépression et à être rechargés.

Ainsi, la forme spatiale générale de la dépression est parallélépipédique.

Le fond de la dépression 4 est en grande partie fermée par une plaque référencée par 6 sur la figure 1. Le profil général de cette plaque 6 est complémentaire du profil de la base de l'appareil à recharger.

Deux ergots 2 de forme cylindrique sont situés sur les parois latérales montantes de la dépression 4. Ces parois sont les parois correspondant aux petits côtés du rectangle de la section de la dépression 4.

Les ergots 2 constituent des moyens de fixation d'un capot pivotant 5 amovible de la base 1'.

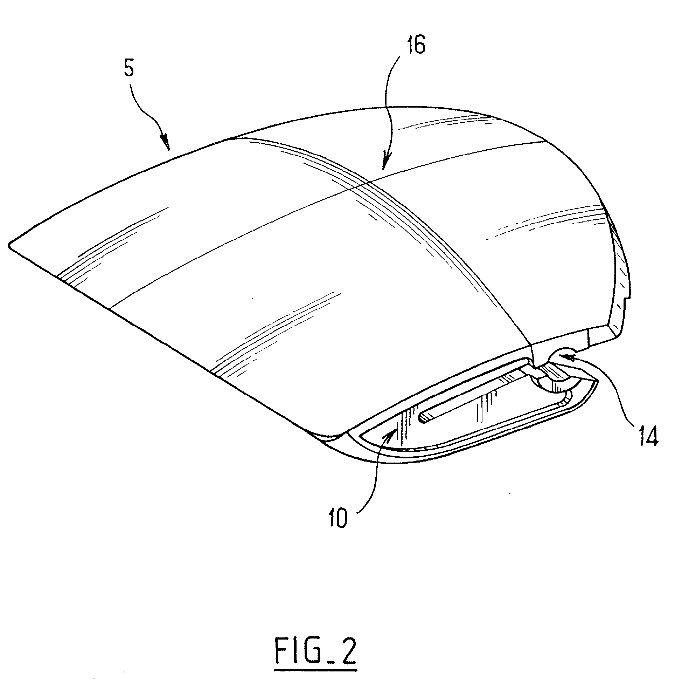

Le capot 5 est représenté sur la figure 2. Il est constitué d'une plaque légèrement bombée complémentaire de la forme de la dépression 4.

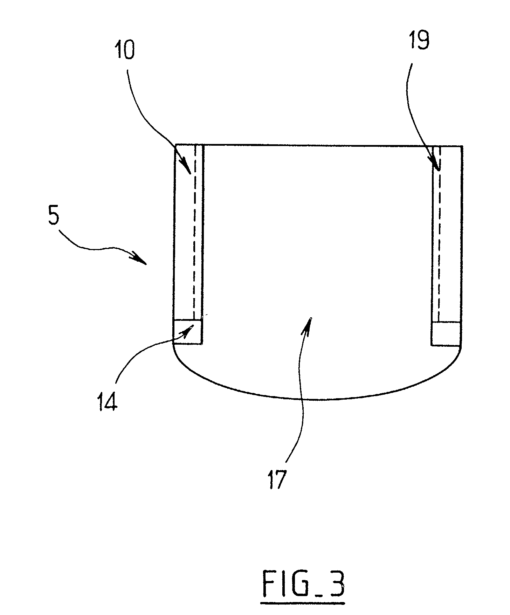

Deux coudes de matière 10 s'étendent perpendiculairement du côté de la partie inférieure du capot 5 référencée par 17 sur les figures 2 et 3. Ils sont situés sur les deux plus petits côtés du capot 5.

Chaque coude 10 comporte à son extrémité inférieure une ouverture 14 complémentaire d'un ergot 2. Le capot 5 peut donc s'enclipser sur les ergots 2.

Le capot 5 est pivotant autour de l'axe défini par les deux ergots 2. Il pivote entre deux positions : l'une ouverte et l'autre fermée.

Dans la position fermée, seule la partie supérieure référencée par 16 sur la figure 2 est visible par l'utilisateur. Dans cette position, la dépression 4 est cachée à l'utilisateur.

On rappelle que la convexité du capot 5 est telle qu'elle est complémentaire de la forme de la base 1' représentée sur la figure 1. Ainsi la forme ovoïde du dispositif 1 est parfaite quand le capot 5 est fermé.

Encore une fois, la forme du dispositif 1 quand le capot 5 est fermé n'est déterminée que par des considérations esthétiques.

Dans la position ouverte, la partie supérieure 16 du capot 5 vient en butée contre le haut de la paroi référencée par 18 sur la figure 1. Dans cette position ouverte, le plan du capot définit avec un plan vertical un angle fixé entre 20° et 30°.

La fourchette de valeurs des angles est ergonomique. L'inclinaison de l'appareil est idéale pour une lecture de données sur la façade de l'appareil. L'inclinaison est également idéale pour une entrée de données sur un clavier situé sur la face avant de l'appareil par exemple.

Chaque coude 10 comporte également un ergot 19 s'étendant perpendiculairement et longitudinalement le long du coude 10. Ces ergots 19 sont complémentaires des rainures standard présentes à la base des téléphones mobiles.

Ainsi en position ouverte, le capot 5, les coudes 10 et les ergots longitudinaux 19 constituent également des moyens de guidage de l'appareil à recharger dans la dépression 4.

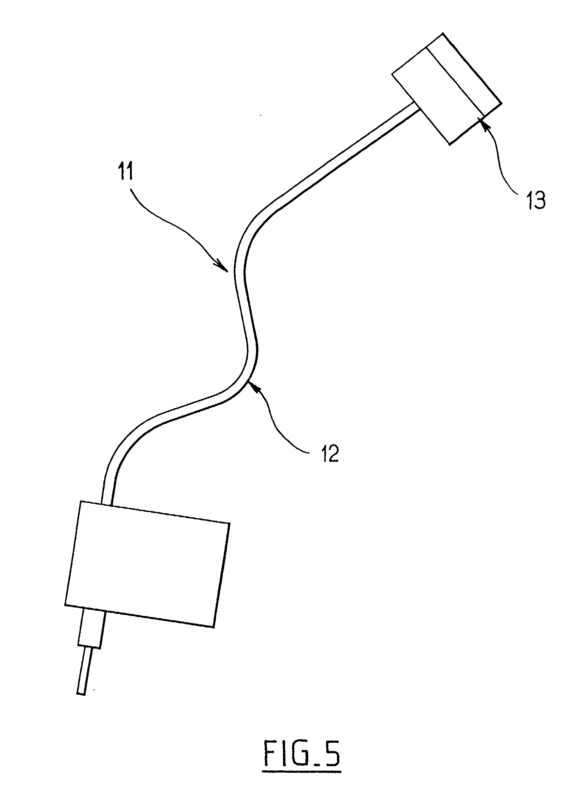

Une ouverture 7 est pratiquée au milieu de la plaque 6. Cette ouverture 7 permet de laisser passer une fiche 13 d'un chargeur 11 représenté sur la figure 5.

Des ergots crochetés sont représentés sur la figure 4. Ils encadrent l'ouverture 7. Ils permettent de maintenir fixement la fiche 13 du chargeur 11 dans l'ouverture 7 par encliquetage. Ainsi, les connexions électriques de la fiche 13 sont en relief du côté de la dépression 4 et peuvent coopérer avec les connecteurs de la batterie à la base de l'appareil à recharger.

Le mode de réalisation représenté sur la figure 4 comporte 3 ergots crochetés 8 autour de l'ouverture 7 mais un nombre quelconque de ces ergots 8 pourrait être imaginé sans sortir du champ de l'invention.

Des ensembles de pattes de fixation 9 sont représentées sur la figure 4. Ces ensembles de pattes 9 sont situés sur la paroi inférieure de la base 1'.

Les pattes de fixation sont assez courtes pour ne pas intersecter le plan de la section tronquée de la base 1'. La stabilité de la base 1' est ainsi assurée. De par leur longueur, elles sont aptes à maintenir fixement dans un ensemble de pattes 9 un nombre relativement élevé de types de parties souples 12 de chargeur 11 représentée à la figure 5.

Le mode de réalisation représenté sur la figure 4 comporte quatre groupements, mais un nombre quelconque de groupements pourrait être imaginé sans quitter le champ de l'invention.

Les quatre groupements du mode de réalisation préféré sont répartis le long des quatre côtés de la dépression 4.

Les pattes 9 dans un ensemble de pattes 9 de fixation sont aptes à coincer le plus grand nombre de sortes de parties souples 12 différentes de chargeurs 11. Ces parties souples se déforment élastiquement dans le groupe de pattes 9 pour être maintenues fixement.

Au moins une lame métallique 15 est située ente le groupement de pattes 9 situé à l'opposé de l'ouverture 7 et une ouverture 21 dans la paroi arrière de la base 1'.

Cette lame 15 permet de plaquer la partie souple 12 du chargeur 11 contre la paroi inférieure de la base 1'. La stabilité de la base est ainsi encore assurée.

L'ouverture 21 située au niveau des moyens de support 3 et à l'opposé de l'ouverture 7 permet un passage de la partie souple 12 du chargeur 11 à l'arrière du dispositif 1.

Le dispositif 1 décrit est apte à être posé sur une table, un bureau ou tout autre surface plane horizontale. Il peut également être fixé au mur par l'intermédiaire d'une étagère.

### FONCTIONNEMENT.

En position de repos, le dispositif 1 est disposé sur une table ou un bureau par exemple. Le capot 5 est en position fermée et le dispositif a une forme générale ovoïde très esthétique.

Lorsque l'utilisateur veut recharger son appareil, il se saisit du dispositif 1. Il ouvre le capot 5 et le met en position de butée contre la paroi 18.

Il dispose la fiche 13 de son chargeur 11 par encliquetage dans les ergots 8.

Il fait passer la partie souple 12 de son chargeur 11 dans le premier ensemble de pattes 9 de fixation le plus proche de l'ouverture 7.

Il fait ensuite passer la partie souple 12 dans un ensemble de pattes de fixation 9 situé sur un des cotés de la dépression 4.

Enfin, il fait passer la partie souple 12 dans l'ensemble de pattes de fixation situé à l'opposé de l'ouverture 7.

Les trois ensemble de pattes de fixation définissent ainsi une chicane qui permettra de maintenir plus fixement la partie souple 12 du chargeur 11 au dispositif 1.

A la sortie du dernier ensemble de pattes 9 de fixation, l'utilisateur dispose la partie souple 12 du chargeur 11 sous la lame métallique 15 et la fait passer dans l'ouverture 21.

La partie souple 12 est fixée sur le dispositif 1 et plaquée audit dispositif 1.

L'utilisateur peut donc désormais poser de nouveau le dispositif 1 sur une table ou sur un bureau.

Vu de dessus, le dispositif 1 comporte désormais les connexions électriques de la fiche 13 saillantes de l'ouverture 7.

L'utilisateur fait alors glisser son appareil le long de la face 17 du capot 5 et fait coopérer les rainures standard à la base de son appareil avec les ergots longitudinaux 19 des coudes 10. La forme de la dépression 4 s'adapte parfaitement à toute une gamme d'appareils de téléphonie mobile par exemple.

Grâce à ce guidage, les moyens récepteurs de connectique à la base de l'appareil sont en parfaite position pour coopérer avec les moyens connectique de la fiche 13 du chargeur 11. L'appareil peut être rechargé.

Les moyens connectique de la fiche 13 constituent de plus des moyens de maintien de l'appareil en position dans la dépression 4.

L'ensemble dispositif 1, appareil, chargeur est très stable et a conservé son esthétique générale.

L'appareil est en position inclinée avec un angle favorisant la lecture de données sur un écran d'affichage ou l'entrée de données sur un clavier.

L'appareil peut facilement être enlevé du dispositif 1. Le dispositif 1 peut être laissé sur le bureau avec le capot 5 en position ouverte ou fermée. En position fermée, le capot cache les moyens connectiques de la fiche 13 restés en place.

La fiche 13 du chargeur 11 peut également être enlevé du dispositif 1. Le capot 5 cache alors l'ouverture 7.

Le dispositif 1 peut également être emmené facilement du fait de sa légèreté. L'absence de toute connectique en son sein en fait un dispositif extrêmement maniable.

Sa simplicité de conception ainsi que sa matière en font un dispositif particulièrement peu cher à fabriquer.

Les développements précédents concernent principalement à la téléphonie mobile, mais l'invention concerne également tous les dispositifs de support et de présentation des appareils amovibles rechargeables.

## Revendications

1. Dispositif de support et de présentation d'appareil amovible rechargeable tel qu'un terminal mobile de téléphonie cellulaire comportant une embase (1), des moyens de guidage de l'appareil rechargeable vers des moyens de connexion à des moyens formant chargeur de batterie, **caractérisé en ce qu'**il comporte des moyens aptes à recevoir de façon amovible une fiche (13) de connexion d'un chargeur externe (11) de batterie, fiche (13) sur laquelle l'appareil rechargeable se connecte directement lorsque ledit appareil et ladite fiche (13) sont en place sur l'embase (1).

2. Dispositif selon la revendication 1, **caractérisé en ce que**, la fiche (13) de connexion étant reliée au chargeur externe par un connecteur souple (12), il comporte des moyens (9) aptes à maintenir fixement le connecteur souple (12) par rapport à l'embase (1) entre la fiche de connexion (13) et un orifice (21) par lequel ledit connecteur souple (12) sort de l'embase (1).

3. Dispositif selon la revendication 1, **caractérisé en ce que** les moyens de guidage comportent un capot (5) amovible de l'embase (1), le capot comportant des ergots (19) s'étendant au droit de deux côtés du capot (5) et coopérant avec des rainures standard présentes sur les appareils amovibles.

4. Dispositif selon la revendication 3, **caractérisé en ce que** le capot (5) est apte à pivoter entre une position fermée dans laquelle il cache la fiche (13) et/ou les moyens aptes à recevoir celle-ci, et une position ouverte qui permet le guidage de l'appareil vers ladite fiche (13) et/ou son maintien selon une inclinaison ergonomique prédéterminée.

5. Dispositif selon la revendication 4, **caractérisé en ce que** l'inclinaison ergonomique fait avec la verticale un angle prédéterminé compris entre 20° et 30 ° lorsque l'embase est en position sur une surface à laquelle elle est destinée.

6. Dispositif selon la revendication 2, **caractérisé en ce que** les moyens (9) de maintien du connecteur (12) souple du chargeur (11) de batterie comportent des ensembles de pattes de fixation disposés sur la face inférieure de l'embase (1) et entre lesquelles le connecteur souple est maintenu par serrage.

7. Dispositif selon la revendication 2, **caractérisé en ce qu'**il comporte en outre des moyens de plaquage (15) élastiques du connecteur (12) souple du chargeur (11) de batterie sur une ou des parois inférieures de l'embase.

8. Dispositif selon la revendication 1, **caractérisé en ce que** les moyens aptes à maintenir la fiche (13) du chargeur (11) comportent des ergots s'étendant au droit d'une ouverture (7) dans laquelle la fiche de connexion est destinée à être reçue.

9. Ensemble comportant un dispositif de support et de présentation d'un appareil amovible rechargeable et un chargeur de batterie **caractérisé en ce que** le dispositif de support et de présentation est un dispositif selon l'une des revendications précédentes.

10. Ensemble comportant un appareil amovible rechargeable, un dispositif de support et de présentation de celui-ci et un chargeur (11) de batterie **caractérisé en ce qu'**il comporte un ensemble selon la revendication 9 ou un dispositif de support et de présentation selon les revendications 1 à 8.
